# EUROPEAN PATENT APPLICATION

(11) **EP 4 847 560 A1**
(43) Date of publication of application: **02.12.2026**
(21) Application number: 25745070.0
(22) Date of filing: 21.01.2025
(51) Int. Cl.: C08L 53/02, B65D 65/00, C08F 297/04

(54) **BLOCK COPOLYMER COMPOSITION, HEAT-SHRINKABLE FILM, AND CONTAINER**

(30) Priority: 24.01.2024 JP 2024009010; 01.02.2024 JP 2024014381
(71) Applicant: Denka Company Limited, Tokyo 103-8338 (JP)
(72) Inventor: KATO, Masahiro, Tokyo 103-8338 (JP); SAWASATO, Tadashi, Tokyo 103-8338 (JP)
(74) Representative: Gulde & Partner
(86) International application number: PCT/JP2025/001783
(87) International publication number: WO 2025/159086

(57) **Abstract**

Provided is a block copolymer composition capable of producing a heat-shrinkable film having excellent rigidity and impact resistance.

According to the present invention, provided is a block copolymer composition comprising a block copolymer containing a vinyl aromatic monomer unit and a conjugated diene monomer unit, wherein the block copolymer composition contains 10 to 30 mass% of the conjugated diene monomer unit when a total mass of the vinyl aromatic monomer unit and the conjugated diene monomer unit in the block copolymer composition is taken as 100 mass%; the block copolymer composition comprises 9 to 39 mass% of a block copolymer A, 6 to 26 mass% of a block copolymer B, and 35 to 85 mass% of a block copolymer C when a total content of the block copolymer containing the vinyl aromatic monomer unit and the conjugated diene monomer unit in the block copolymer composition is taken as 100 mass%; the block copolymer A has a block structure represented by (S1)-(S/B1), (S1) is a block containing 85 to 100 mass% of the vinyl aromatic monomer unit, (S/B1) is a tapered block containing the vinyl aromatic monomer unit and the conjugated diene monomer unit and containing 20 to 60 mass% of the conjugated diene monomer unit, the block copolymer A contains 5 to 15 mass% of the conjugated diene monomer unit; the block copolymer B has a block structure represented by (S2)-(S/B2), (S2) is a block containing 85 to 100 mass% of the vinyl aromatic monomer unit, (S/B2) is a tapered block containing the vinyl aromatic monomer unit and the conjugated diene monomer unit and containing 20 to 60 mass% of the conjugated diene monomer unit, the block copolymer B contains more than 15 mass% and 50 mass% or less of the conjugated diene monomer unit; the block copolymer C has a block structure represented by (S3)-(S/B3)-(S/B4), (S3) is a block containing 85 to 100 mass% of the vinyl aromatic monomer unit, (S/B3) and (S/B4) are each a tapered block containing the vinyl aromatic monomer unit and the conjugated diene monomer unit and containing 8 to 36 mass% of the conjugated diene monomer unit, the block copolymer C contains 7 to 32 mass% of the conjugated diene monomer unit, and the mass ratio of (S/B4) to (S/B3) is 0.6 to 5.5.

## Description

### Technical Field

The present invention relates to a block copolymer composition, a heat-shrinkable film, and a container.

### Background Art

A heat-shrinkable film using a block copolymer obtained by polymerizing a vinyl aromatic compound and a conjugated diene compound has excellent heat-shrinkability and finish after shrinkage, and can accommodate various shapes and attachment methods of packaged objects. Therefore, it is widely used for shrink packaging such as labels for PET bottle beverages (Patent Literature 1).

### Citation List

### Patent Literature

[Patent Literature 1] JP 1999-158241 A

In recent years, with increasing complexity of the shapes of packaged objects, there has been a demand for high rigidity of the film such that the heat-shrinkable film does not buckle during attachment, and high impact resistance such that the label does not fracture upon impact caused by the packaged object being dropped after the label is attached.

### Summary of Invention

### Technical Problem

However, with a block copolymer obtained by polymerizing a vinyl aromatic compound and a conjugated diene compound, it has conventionally been difficult to achieve both rigidity and impact resistance of a film.

The present invention has been made in view of the above circumstances, and provides a block copolymer composition capable of producing a heat-shrinkable film having excellent rigidity and impact resistance.

### Solution to Problem

The present inventors have conducted intensive studies to solve the above problems and, as a result, have found that the above problems can be solved by a composition comprising, in specific proportions, several kinds of block copolymers containing a vinyl aromatic monomer unit and a conjugated diene monomer unit, thereby completing the present invention.

According to the present invention, the following inventions are provided.
[1] A block copolymer composition comprising a block copolymer containing a vinyl aromatic monomer unit and a conjugated diene monomer unit, wherein:
   the block copolymer composition contains 10 to 30 mass% of the conjugated diene monomer unit when a total mass of the vinyl aromatic monomer unit and the conjugated diene monomer unit in the block copolymer composition is taken as 100 mass%;
   the block copolymer composition comprises 9 to 39 mass% of a block copolymer A, 6 to 26 mass% of a block copolymer B, and 35 to 85 mass% of a block copolymer C, when a total content of the block copolymer containing the vinyl aromatic monomer unit and the conjugated diene monomer unit in the block copolymer composition is taken as 100 mass%;
   the block copolymer A has a block structure represented by (S1)-(S/B1);
   (S1) is a block containing 85 to 100 mass% of the vinyl aromatic monomer unit;
   (S/B1) is a tapered block containing the vinyl aromatic monomer unit and the conjugated diene monomer unit and containing 20 to 60 mass% of the conjugated diene monomer unit;
   the block copolymer A contains 5 to 15 mass% of the conjugated diene monomer unit;
   the block copolymer B has a block structure represented by (S2)-(S/B2);
   (S2) is a block containing 85 to 100 mass% of the vinyl aromatic monomer unit;
   (S/B2) is a tapered block containing the vinyl aromatic monomer unit and the conjugated diene monomer unit and containing 20 to 60 mass% of the conjugated diene monomer unit;
   the block copolymer B contains more than 15 mass% and 50 mass% or less of the conjugated diene monomer unit;
   the block copolymer C has a block structure represented by (S3)-(S/B3)-(S/B4);
   (S3) is a block containing 85 to 100 mass% of the vinyl aromatic monomer unit;
   (S/B3) and (S/B4) are each a tapered block containing the vinyl aromatic monomer unit and the conjugated diene monomer unit and containing 8 to 36 mass% of the conjugated diene monomer unit;
   the block copolymer C contains 7 to 32 mass% of the conjugated diene monomer unit; and
   the mass ratio of (S/B4) to (S/B3) is 0.6 to 5.5.
[2] The block copolymer composition of [1], wherein the block copolymer composition has, in a molecular weight distribution by GPC measurement in terms of polystyrene-equivalent molecular weight: at least one molecular weight peak within a weight-average molecular weight range of 140,000 to 220,000; and at least one molecular weight peak within a weight-average molecular weight range of 50,000 to 90,000.
[3] The block copolymer composition of [1] or [2], wherein a flexural modulus measured in accordance with ISO 178 using a Type A test specimen conforming to ISO 3167 is 1300 MPa or more.
[4] The block copolymer composition of any one of [1] to [3], further comprising a block copolymer D, wherein:
   the block copolymer D has a block structure represented by (S4)-(S/B5);
   (S4) is a block containing 85 to 100 mass% of the vinyl aromatic monomer unit;
   (S/B5) is a tapered block containing the vinyl aromatic monomer unit and the conjugated diene monomer unit and containing 5 mass% or more and less than 20 mass% of the conjugated diene monomer unit; and
   the block copolymer D contains 4 to 20 mass% of the conjugated diene monomer unit.
[5] A heat-shrinkable film comprising a layer constituted of the block copolymer composition of any one of [1] to [4].
[6] A container having the heat-shrinkable film of [5] attached thereto.

### Advantageous Effects of Invention

The block copolymer composition of the present invention has excellent rigidity and impact resistance in molded articles, and can be used for heat-shrinkable films and the like.

### Description of Embodiments

Hereinafter, embodiments of the present invention will be described. Various features disclosed in the embodiments described below can be combined with each other. In addition, each feature may independently constitute an invention. Furthermore, among the elements described in the following embodiments, elements that are not defined in the claims are optional and may be omitted. Any number of zeros (for example, one or two zeros) may be added to the end of the numerical values disclosed in the following description. For example, one or two zeros may be added after "1.4" to obtain "1.40" or "1.400".

### 1. Block Copolymer Composition

A block copolymer composition according to an embodiment of the present invention comprises a block copolymer containing a vinyl aromatic monomer unit and a conjugated diene monomer unit. A block copolymer containing a vinyl aromatic monomer unit and a conjugated diene monomer unit may be obtained, for example, by a living anionic polymerization reaction in an organic solvent using an organolithium compound or the like as a polymerization initiator. In living anionic polymerization, almost the entire amounts of the vinyl aromatic monomer and the conjugated diene monomer subjected to the polymerization reaction may be converted into a polymer, and thus a block copolymer having an arbitrary primary structure may be obtained by changing the amounts added and the order of addition thereof.

The block copolymer composition comprises, as the block copolymer containing the vinyl aromatic monomer unit and the conjugated diene monomer unit, a block copolymer A, a block copolymer B, and a block copolymer C. Preferably, the block copolymer composition further comprises a block copolymer D as the block copolymer containing the vinyl aromatic monomer unit and the conjugated diene monomer unit. In addition, the block copolymer composition may further comprise a block copolymer, other than the block copolymers A to D, containing a vinyl aromatic monomer unit and a conjugated diene monomer unit.

The block copolymer composition contains 10 to 30 mass% of the conjugated diene monomer unit when a total mass of the vinyl aromatic monomer unit and the conjugated diene monomer unit in the block copolymer composition is taken as 100 mass%. Specifically, the content of the conjugated diene monomer unit when the total mass of the vinyl aromatic monomer unit and the conjugated diene monomer unit in the block copolymer composition is taken as 100 mass% is, for example, 10, 11, 12, 13, 14, 15, 16, 17, 18, 19, 20, 21, 22, 23, 24, 25, 26, 27, 28, 29, or 30 mass%, and may be within a range between any two of the values exemplified herein.

When a total content of the block copolymer containing the vinyl aromatic monomer unit and the conjugated diene monomer unit in the block copolymer composition is taken as 100 mass%, the block copolymer composition comprises 9 to 39 mass% of the block copolymer A, 6 to 26 mass% of the block copolymer B, and 35 to 85 mass% of the block copolymer C, and preferably comprises 15 to 30 mass% of the block copolymer A, 10 to 20 mass% of the block copolymer B, and 40 to 70 mass% of the block copolymer C. Further, when a total content of the block copolymer containing the vinyl aromatic monomer unit and the conjugated diene monomer unit in the block copolymer composition is taken as 100 mass%, the block copolymer composition may comprise 9 to 39 mass% of the block copolymer A, 6 to 26 mass% of the block copolymer B, 35 to 84 mass% of the block copolymer C, and 1 to 30 mass% of the block copolymer D, and preferably comprises 15 to 30 mass% of the block copolymer A, 10 to 20 mass% of the block copolymer B, 40 to 70 mass% of the block copolymer C, and 5 to 25 mass% of the block copolymer D.

When a total content of the block copolymer containing the vinyl aromatic monomer unit and the conjugated diene monomer unit in the block copolymer composition is taken as 100 mass%, the content of the block copolymer A is specifically, for example, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, or 39 mass%, and may be within a range between any two of the values exemplified herein. When a total content of the block copolymer containing the vinyl aromatic monomer unit and the conjugated diene monomer unit in the block copolymer composition is taken as 100 mass%, the content of the block copolymer B is specifically, for example, 6, 7, 8, 9, 10, 11, 12, 13, 14, 15, 16, 17, 18, 19, 20, 21, 22, 23, 24, 25, or 26 mass%, and may be within a range between any two of the values exemplified herein. When a total content of the block copolymer containing the vinyl aromatic monomer unit and the conjugated diene monomer unit in the block copolymer composition is taken as 100 mass%, the content of the block copolymer C is specifically, for example, 35, 40, 41, 42, 43, 44, 45, 46, 47, 48, 49, 50, 51, 52, 53, 54, 55, 56, 57, 58, 59, 60, 65, 70, 75, 80, or 85 mass%, and may be within a range between any two of the values exemplified herein. When a total content of the block copolymer containing the vinyl aromatic monomer unit and the conjugated diene monomer unit in the block copolymer composition is taken as 100 mass%, the content of the block copolymer D is specifically, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 mass%, and may be within a range between any two of the values exemplified herein.

The block copolymer composition may contain the block copolymer containing the vinyl aromatic monomer unit and the conjugated diene monomer unit in an amount of, for example, 50 to 100 mass%, and preferably 90 to 100 mass%. The content of the block copolymer containing the vinyl aromatic monomer unit and the conjugated diene monomer unit in the block copolymer composition is specifically, for example, 50, 55, 60, 65, 70, 75, 80, 85, 90, 95, 96, 97, 98, 99, or 100 mass%, and may be within a range between any two of the values exemplified herein. The block copolymer composition may contain the block copolymers A to D in a total amount of, for example, 50 to 100 mass%, and preferably 90 to 100 mass%. The total content of the block copolymers A to D in the block copolymer composition is specifically, for example, 50, 55, 60, 65, 70, 75, 80, 85, 90, 95, 96, 97, 98, 99, or 100 mass%, and may be within a range between any two of the values exemplified herein.

### <Block Copolymer A>

The block copolymer A has a block structure represented by (S1)-(S/B1). The block copolymer A is a polymer in which the block structure is formed in a linear manner.

(S1) is a block of a (co)polymer containing a vinyl aromatic monomer unit, and is a block containing 85 to 100 mass%, preferably a block containing 95 to 100 mass%, of the vinyl aromatic monomer unit relative to a total of 100 mass% of monomer units constituting (S1), and more preferably a block consisting of a styrene homopolymer.

(S/B1) is a block of a copolymer containing the vinyl aromatic monomer unit and the conjugated diene monomer unit, and is a tapered block containing the conjugated diene monomer unit in an amount of 20 to 60 mass%, preferably 30 to 50 mass%, and more preferably 35 to 45 mass%, relative to a total of 100 mass% of monomer units constituting (S/B1). Specifically, the content of the conjugated diene monomer unit relative to a total of 100 mass% of the monomer units constituting (S/B1) is, for example, 20, 25, 30, 35, 36, 37, 38, 39, 40, 41, 42, 43, 44, 45, 50, 55, or 60 mass%, and may be within a range between any two of the values exemplified herein.

The block copolymer A contains 5 to 15 mass%, and preferably 7 to 13 mass%, of the conjugated diene monomer unit relative to 100 mass% of the block copolymer A. Specifically, the content of the conjugated diene monomer unit relative to 100 mass% of the block copolymer A is, for example, 5, 6, 7, 8, 9, 10, 11, 12, 13, 14, or 15 mass%, and may be within a range between any two of the values exemplified herein. Further, the block copolymer A may contain 85 to 95 mass% of the vinyl aromatic monomer unit relative to 100 mass% of the block copolymer A. The block copolymer A may contain a monomer unit (other monomer unit) other than the vinyl aromatic monomer unit and the conjugated diene monomer unit, and the content of the other monomer unit is, for example, 0 to 2 mass%, preferably 0 to 1 mass%, and more preferably 0 to 0.1 mass% relative to 100 mass% of the block copolymer A. In one example, the block copolymer A does not contain, or substantially does not contain, the other monomer unit.

The block copolymer A does not have a block structure represented by (S3)-(S/B3)-(S/B4) described later.

### <Block Copolymer B>

The block copolymer B has a block structure represented by (S2)-(S/B2). (S2) is a block of a (co)polymer containing a vinyl aromatic monomer unit, and is a block containing 85 to 100 mass%, preferably a block containing 95 to 100 mass%, of the vinyl aromatic monomer unit relative to a total of 100 mass% of monomer units constituting (S2), and more preferably a block consisting of a styrene homopolymer.

(S/B2) is a block of a copolymer containing the vinyl aromatic monomer unit and the conjugated diene monomer unit, and is a tapered block containing the conjugated diene monomer unit in an amount of 20 to 60 mass%, preferably 30 to 50 mass%, and more preferably 35 to 45 mass%, relative to a total of 100 mass% of monomer units constituting (S/B2). Specifically, the content of the conjugated diene monomer unit relative to a total of 100 mass% of the monomer units constituting (S/B2) is, for example, 20, 25, 30, 35, 36, 37, 38, 39, 40, 41, 42, 43, 44, 45, 50, 55, or 60 mass%, and may be within a range between any two of the values exemplified herein.

The block copolymer B contains more than 15 mass% and 50 mass% or less, and preferably 20 to 40 mass%, of the conjugated diene monomer unit relative to 100 mass% of the block copolymer B. Specifically, the content of the conjugated diene monomer unit relative to 100 mass% of the block copolymer B is, for example, 16, 20, 25, 26, 27, 28, 29, 30, 31, 32, 33, 34, 35, 40, 45, or 50 mass%, and may be within a range between any two of the values exemplified herein. Further, the block copolymer B may contain 50 mass% or more and less than 85 mass% of the vinyl aromatic monomer unit relative to 100 mass% of the block copolymer B. The block copolymer B may contain a monomer unit (other monomer unit) other than the vinyl aromatic monomer unit and the conjugated diene monomer unit, and the content of the other monomer unit is, for example, 0 to 2 mass%, preferably 0 to 1 mass%, and more preferably 0 to 0.1 mass% relative to 100 mass% of the block copolymer B. In one example, the block copolymer B does not contain, or substantially does not contain, the other monomer unit.

The block copolymer B does not have a block structure represented by (S3)-(S/B3)-(S/B4) described later.

### <Block Copolymer C>

The block copolymer C has a block structure represented by (S3)-(S/B3)-(S/B4). (S3) is a block of a (co)polymer containing a vinyl aromatic monomer unit, and is a block containing 85 to 100 mass%, preferably a block containing 95 to 100 mass%, of the vinyl aromatic monomer unit relative to a total of 100 mass% of monomer units constituting (S3), and more preferably a block consisting of a styrene homopolymer.

(S/B3) and (S/B4) are each a block of a copolymer containing the vinyl aromatic monomer unit and the conjugated diene monomer unit, and are each a tapered block containing the conjugated diene monomer unit in an amount of 8 to 36 mass%, preferably 10 to 30 mass%, relative to a total of 100 mass% of monomer units constituting (S/B3) or (S/B4). The compositions of (S/B3) and (S/B4) may be different from each other. (S/B3) is a tapered block containing the conjugated diene monomer unit more preferably in an amount of 8 to 20 mass%, and further preferably 9 to 15 mass%, relative to a total of 100 mass% of the monomer units constituting (S/B3). (S/B4) is a tapered block containing the conjugated diene monomer unit more preferably in an amount of more than 20 mass% and 36 mass% or less, and further preferably 25 to 35 mass%, relative to a total of 100 mass% of the monomer units constituting (S/B4). Specifically, the content of the conjugated diene monomer unit in each block relative to a total of 100 mass% of the monomer units constituting (S/B3) or (S/B4) is, for example, 8, 9, 10, 11, 12, 13, 14, 15, 16, 17, 18, 19, 20, 21, 22, 23, 24, 25, 26, 27, 28, 29, 30, 31, 32, 33, 34, 35, or 36 mass%, and may be within a range between any two of the values exemplified herein.

The block copolymer C contains 7 to 32 mass%, preferably 15 to 25 mass%, of the conjugated diene monomer unit relative to 100 mass% of the block copolymer C. Specifically, the content of the conjugated diene monomer unit relative to 100 mass% of the block copolymer C is, for example, 7, 10, 15, 16, 17, 18, 19, 20, 21, 22, 23, 24, 25, 30, or 32 mass%, and may be within a range between any two of the values exemplified herein. Further, the block copolymer C may contain 68 to 93 mass% of the vinyl aromatic monomer unit relative to 100 mass% of the block copolymer C. The block copolymer C may contain a monomer unit (other monomer unit) other than the vinyl aromatic monomer unit and the conjugated diene monomer unit, and the content of the other monomer unit is, for example, 0 to 2 mass%, preferably 0 to 1 mass%, and more preferably 0 to 0.1 mass% relative to 100 mass% of the block copolymer C. In one example, the block copolymer C does not contain, or substantially does not contain, the other monomer unit.

The mass ratio [(S/B4)/(S/B3)] of (S/B4) to (S/B3) is 0.6 to 5.5, and preferably 0.7 to 1.5. Specifically, the mass ratio is, for example, 0.6, 0.7, 0.8, 0.9, 1.0, 1.1, 1.2, 1.3, 1.4, 1.5, 2.0, 2.5, 3.0, 3.5, 4.0, 4.5, 5.0, or 5.5, and may be within a range between any two of the values exemplified herein.

### <Block Copolymer D>

The block copolymer D has a block structure represented by (S4)-(S/B5). (S4) is a block of a (co)polymer containing a vinyl aromatic monomer unit, and is a block containing 85 to 100 mass%, preferably a block containing 95 to 100 mass%, of the vinyl aromatic monomer unit relative to a total of 100 mass% of monomer units constituting (S4), and more preferably a block consisting of a styrene homopolymer.

(S/B5) is a block of a copolymer containing the vinyl aromatic monomer unit and the conjugated diene monomer unit, and is a tapered block containing the conjugated diene monomer unit in an amount of 5 mass% or more and less than 20 mass%, preferably 7 to 15 mass%, relative to a total of 100 mass% of monomer units constituting (S/B5). Specifically, the content of the conjugated diene monomer unit relative to a total of 100 mass% of the monomer units constituting (S/B5) is, for example, 5, 6, 7, 8, 9, 10, 11, 12, 13, 14, 15, 16, 17, 18, or 19 mass%, and may be within a range between any two of the values exemplified herein.

The block copolymer D contains 4 to 20 mass%, preferably 5 to 15 mass%, of the conjugated diene monomer unit relative to 100 mass% of the block copolymer D. Specifically, the content of the conjugated diene monomer unit relative to 100 mass% of the block copolymer D is, for example, 4, 5, 6, 7, 8, 9, 10, 11, 12, 13, 14, 15, 16, 17, 18, 19, or 20 mass%, and may be within a range between any two of the values exemplified herein. Further, the block copolymer D may contain 80 to 96 mass% of the vinyl aromatic monomer unit relative to 100 mass% of the block copolymer D. The block copolymer D may contain a monomer unit (other monomer unit) other than the vinyl aromatic monomer unit and the conjugated diene monomer unit, and the content of the other monomer unit is, for example, 0 to 2 mass%, preferably 0 to 1 mass%, and more preferably 0 to 0.1 mass% relative to 100 mass% of the block copolymer D. In one example, the block copolymer D does not contain, or substantially does not contain, the other monomer unit.

The block copolymer D does not have the block structure represented by (S3)-(S/B3)-(S/B4) described above.

In the present specification, the "tapered block" means a block in a state where the microscopic composition of the vinyl aromatic monomer unit and the conjugated diene monomer unit continuously changes in one direction. For example, when both the vinyl aromatic monomer and the conjugated diene monomer are added together at once, the highly reactive conjugated diene monomer is preferentially polymerized to form a polymer chain having a high proportion of the conjugated diene monomer unit at the initial stage of block formation; however, as the polymerization proceeds, the concentration of the conjugated diene monomer decreases and the concentration of the vinyl aromatic monomer increases, resulting in a polymer chain having a low proportion of the conjugated diene monomer unit at the final stage of block formation. Note that, as a block in a state different from the "tapered block", there is a block called a "random block" or the like, which means a block in a state where the microscopic composition of the vinyl aromatic monomer unit and the conjugated diene monomer unit is substantially constant within the block.

### <Each Monomer Unit>

The vinyl aromatic monomer unit is a structural unit derived from a vinyl aromatic monomer used for the polymerization of each block copolymer. The vinyl aromatic monomer is a compound in which a vinyl group is bonded to an aromatic ring. Examples of the vinyl aromatic monomer include styrene, o-methylstyrene, p-methylstyrene, p-tert-butylstyrene, 2,4-dimethylstyrene, 2,5-dimethylstyrene, α-methylstyrene, vinylnaphthalene, vinylanthracene, and the like. The vinyl aromatic monomer preferably contains styrene, and is more preferably styrene. These monomers may be used alone or in combination of two or more. The vinyl aromatic monomers used for the respective block copolymers of the block copolymers A to D (and by extension, the vinyl aromatic monomer units contained in the block copolymers) may be the same or different from each other, but are preferably the same.

The conjugated diene monomer unit is a unit derived from a conjugated diene monomer used for the polymerization of the block copolymer. The conjugated diene monomer is a compound having a conjugated chemical structure represented by C=C-C=C. Examples of the conjugated diene monomer include 1,3-butadiene, 2-methyl-1,3-butadiene (isoprene), 2,3-dimethyl-1,3-butadiene, 1,3-pentadiene, 1,3-hexadiene, and the like. The conjugated diene monomer preferably contains 1,3-butadiene, and is more preferably 1,3-butadiene. These monomers may be used alone or in combination of two or more. The conjugated diene monomers used for the respective block copolymers of the block copolymers A to D (and by extension, the conjugated diene monomer units contained in the block copolymers) may be the same or different from each other, but are preferably the same.

The content of the conjugated diene monomer unit may be calculated from the charged amounts of the vinyl aromatic monomer and the conjugated diene monomer during the production of each block copolymer, or may be calculated using a known halogen addition method. As an example of measurement by a general halogen addition method, after dissolving the sample in a solvent capable of completely dissolving it, an excess amount of an iodine monochloride/acetic acid solution is added and allowed to react sufficiently, a potassium iodide solution is added, and titration is performed with a sodium thiosulfate/ethanol solution. The content of the conjugated diene monomer unit is calculated from the amount of double bonds obtained by the above method. Regarding the content of the vinyl aromatic monomer unit, a value obtained by subtracting the content of the conjugated diene monomer unit from the entire sample is calculated as the content of the vinyl aromatic monomer unit.

### <Molecular Weight>

The block copolymer composition preferably has, in terms of polystyrene-equivalent molecular weight in a molecular weight distribution measured by gel permeation chromatography (GPC), at least one molecular weight peak in a weight-average molecular weight range of 140,000 to 220,000, and at least one molecular weight peak in a weight-average molecular weight range of 50,000 to 90,000. The at least one molecular weight peak in the weight-average molecular weight range of 140,000 to 220,000 is preferably a peak derived from a block copolymer containing a vinyl aromatic monomer unit and a conjugated diene monomer unit. The at least one molecular weight peak in the weight-average molecular weight range of 50,000 to 90,000 is preferably a peak derived from a block copolymer containing a vinyl aromatic monomer unit and a conjugated diene monomer unit.

In one embodiment, the block copolymer composition has, in terms of polystyrene-equivalent molecular weight in a molecular weight distribution measured by GPC, at least two molecular weight peaks in a weight-average molecular weight range of 140,000 to 220,000, and at least one molecular weight peak in a weight-average molecular weight range of 50,000 to 90,000. One of the molecular weight peaks in the weight-average molecular weight range of 140,000 to 220,000 is a peak derived from the block copolymer A. One of the molecular weight peaks in the weight-average molecular weight range of 140,000 to 220,000 is a peak derived from the block copolymer C. One of the molecular weight peaks in the weight-average molecular weight range of 50,000 to 90,000 is a peak derived from the block copolymer B.

In one embodiment, the block copolymer composition has, in terms of polystyrene-equivalent molecular weight in a molecular weight distribution measured by GPC, at least two molecular weight peaks in a weight-average molecular weight range of 50,000 to 90,000, and at least two molecular weight peaks in a weight-average molecular weight range of 50,000 to 90,000. One of the molecular weight peaks in the weight-average molecular weight range of 140,000 to 220,000 is a peak derived from the block copolymer A. One of the molecular weight peaks in the weight-average molecular weight range of 140,000 to 220,000 is a peak derived from the block copolymer C. One of the molecular weight peaks in the weight-average molecular weight range of 50,000 to 90,000 is a peak derived from the block copolymer B. One of the molecular weight peaks in the weight-average molecular weight range of 50,000 to 90,000 is a peak derived from the block copolymer D.

The weight-average molecular weight (polystyrene-equivalent value measured by GPC) of the block copolymer A is, for example, 130,000 to 250,000, preferably 140,000 to 200,000, and more preferably 150,000 or more and less than 180,000. Specifically, the weight-average molecular weight of the block copolymer A is, for example, 130,000, 140,000, 150,000, 160,000, 170,000, 175,000, 180,000, 190,000, 200,000, 210,000, 220,000, 230,000, 240,000, or 250,000, and may be within a range between any two of the values exemplified herein.

The weight-average molecular weight (polystyrene-equivalent value measured by GPC) of the block copolymer B is, for example, 40,000 or more and less than 130,000, and preferably 50,000 to 100,000. Specifically, the weight-average molecular weight of the block copolymer B is, for example, 40,000, 50,000, 60,000, 70,000, 80,000, 90,000, 100,000, 110,000, or 120,000, and may be within a range between any two of the values exemplified herein.

The weight-average molecular weight (polystyrene-equivalent value measured by GPC) of the block copolymer C is, for example, 140,000 to 300,000, preferably 160,000 to 250,000, and more preferably 180,000 to 220,000. Specifically, the weight-average molecular weight of the block copolymer C is, for example, 140,000, 150,000, 160,000, 170,000, 180,000, 190,000, 200,000, 210,000, 220,000, 230,000, 240,000, 250,000, 260,000, 270,000, 280,000, 290,000, or 300,000, and may be within a range between any two of the values exemplified herein.

The weight-average molecular weight (polystyrene-equivalent value measured by GPC) of the block copolymer D is, for example, 50,000 or more and less than 130,000, and preferably 60,000 to 120,000. Specifically, the weight-average molecular weight of the block copolymer D is, for example, 50,000, 60,000, 70,000, 80,000, 90,000, 100,000, 110,000, or 120,000, and may be within a range between any two of the values exemplified herein.

### <Additives and the Like>

The block copolymer composition may comprise a polymer other than the block copolymer containing the vinyl aromatic monomer unit and the conjugated diene monomer unit. Further, the block copolymer composition may contain other additives as necessary.

Examples of the other additives include various stabilizers, lubricants, processing aids, antistatic agents, antifogging agents, light resistance improvers, softeners, plasticizers, pigments, and the like. Each additive may be added to a solution of the block copolymer, or may be blended with the recovered block copolymer and melt-mixed. The content of these additives in the block copolymer composition is, for example, 0 to 10 mass%. Specifically, the content is, for example, 0, 0.1, 0.5, 1, 2, 3, 4, 5, 6, 7, 8, 9, or 10 mass%, and may be within a range between any two of the values exemplified herein.

Examples of the stabilizers include phenolic antioxidants such as 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, octadecyl-3-(3,5-di-tert-butyl-4-hydroxyphenyl)propionate, and 2,6-di-tert-butyl-4-methylphenol; phosphorus-based antioxidants such as trisnonylphenyl phosphite; and the like. Examples of the antiblocking agents, antistatic agents, and lubricants include fatty acid amides, ethylenebisstearamide, sorbitan monostearate, saturated fatty acid esters of aliphatic alcohols, pentaerythritol fatty acid esters, and the like.

### <Characteristics of Block Copolymer Composition>

### (Flexural Modulus)

The block copolymer composition preferably has a flexural modulus of 1300 MPa or more, more preferably 1400 MPa or more, and still more preferably 1500 MPa or more, as measured in accordance with ISO 178 using a Type A test specimen obtained by molding the block copolymer composition in accordance with ISO 3167. When such a range is satisfied, excellent rigidity is achieved. The upper limit of the flexural modulus is, for example, 2500 MPa or less, and is 2000 MPa or less from the viewpoint of impact resistance. Specifically, the flexural modulus is, for example, 1300, 1400, 1500, 1600, 1700, 1800, 1900, 2000, 2100, 2200, 2300, 2400, or 2500 MPa, and may be within a range between any two of the values exemplified herein.

### <Method for Producing Block Copolymer Composition>

### (Method for Producing Block Copolymer)

The method for producing the block copolymers A to D is not particularly limited. For example, the block copolymers A to D may be obtained by a living anionic polymerization reaction of a monomer raw material containing a vinyl aromatic monomer and a conjugated diene monomer in an organic solvent using an organolithium compound as a polymerization initiator.

Examples of the organic solvent include aliphatic hydrocarbons such as butane, pentane, hexane, isopentane, heptane, octane, and isooctane; alicyclic hydrocarbons such as cyclopentane, methylcyclopentane, cyclohexane, methylcyclohexane, and ethylcyclohexane; aromatic hydrocarbons such as benzene, toluene, ethylbenzene, and xylene; and the like. A particularly preferred organic solvent is cyclohexane.

The organolithium compound is a compound in which one or more lithium atoms are bonded in the molecule. Examples of the organolithium compound include monofunctional organolithium compounds such as ethyllithium, n-propyllithium, isopropyllithium, n-butyllithium, sec-butyllithium, and tert-butyllithium; polyfunctional organolithium compounds such as hexamethylenedilithium, butadienyldilithium, and isoprenyldilithium; and the like. A particularly preferred organolithium compound is n-butyllithium.

In the living anionic polymerization, a block copolymer having an arbitrary primary structure may be obtained by changing the amounts added and methods of addition of the monomer raw material. For example, the molecular weight can be adjusted by the ratio of the organolithium compound to the monomer raw material, and the ratio of the vinyl aromatic monomer unit to the conjugated diene monomer unit in each block chain and the state of change in the ratio, such as forming a tapered block by adding both monomers all at once, can be controlled by the addition method such as the order of addition and the method of divided addition.

The block copolymer thus obtained is deactivated by adding a polymerization terminator such as water, alcohol, or carbon dioxide in an amount sufficient to deactivate the active ends. As a method for recovering the copolymer from the obtained block copolymer solution (polymerization solution), any method may be adopted, such as (A) a method of precipitating with a poor solvent such as methanol, (B) a method of precipitating by evaporating the solvent with a heating roll or the like (drum dryer method), (C) a method of concentrating the solution with a concentrator and then removing the solvent with a vented extruder (devolatilization extrusion method), and (D) a method of dispersing the solution in water, blowing steam to remove the solvent by heating, and recovering the copolymer (steam stripping method). The devolatilization extrusion method is particularly preferred.

The block copolymer composition is obtained by mixing three or more block copolymers containing a vinyl aromatic monomer unit and a conjugated diene monomer unit obtained by the above-described production method or the like. As a mixing method, a known method may be adopted. For example, pellets or powder of the block copolymers may be dry-blended using a Henschel mixer, a ribbon blender, a super mixer, a V blender, or the like, and may further be melted and pelletized using an extruder. In one embodiment, melt mixing is preferred. Further, a method of mixing the polymer solutions (polymerization solutions) with each other and then removing the solvent may also be used. In addition, the other additives described above may be added and mixed as necessary.

### 2. Film and Container

A film according to an embodiment of the present invention is a molded article obtained by molding the above block copolymer composition. The film is, for example, a heat-shrinkable film, and is a heat-shrinkable film comprising the block copolymer composition. The heat-shrinkable film may be obtained by uniaxially, biaxially, or multiaxially stretching an unstretched film (hereinafter, the unstretched film is referred to as a sheet for distinction) extruded by a known method, for example, a T-die method or a tubular method, using the block copolymer composition (for example, pellets thereof). Biaxial stretching by the T-die method is particularly preferred. Incidentally, at the time of extrusion molding, in addition to the block copolymer composition (for example, pellets thereof), an antiblocking agent such as high-impact polystyrene may be added and used as necessary in an amount of, for example, 0.1 to 10 parts by mass, and preferably 0.5 to 5 parts by mass, with respect to 100 parts by mass of the block copolymer composition.

The heat-shrinkable film according to an embodiment of the present invention comprises a layer constituted of the block copolymer composition. Further, the heat-shrinkable film may comprise only the layer constituted of the block copolymer composition (single layer or multiple layers), or another resin layer may be laminated on at least one surface of the layer constituted of the block copolymer composition. In order to obtain a heat-shrinkable film having a multi-layer structure, another resin layer may be laminated on a film constituted of the block copolymer composition after stretching, another resin layer may be laminated on a sheet obtained by forming the block copolymer composition into a film, and the resulting laminate may then be stretched, or a multi-layer sheet in which the block copolymer composition and another resin are laminated by multi-layer extrusion molding may be stretched. Examples of the resin used for the other resin layer include styrene-based resins (such as homopolymers of styrene-based monomers).

Examples of uniaxial stretching include a method of stretching the extruded sheet in a direction orthogonal to the extrusion direction (TD) using a tenter, a method of stretching the extruded tubular sheet in the circumferential direction, and the like.

Examples of biaxial stretching include a method of stretching the extruded sheet in the extrusion direction (MD) with a roll and then stretching it in a direction orthogonal to the extrusion direction (TD) with a tenter or the like, a method of stretching the extruded tubular sheet simultaneously or separately in the extrusion direction and the circumferential direction, and the like.

The stretching temperature is preferably, for example, 60 to 120°C. By setting the temperature to 60°C or higher, the sheet or film is less likely to break during stretching, and by setting the temperature to 120°C or lower, the shrinkage characteristics and thickness accuracy of the obtained film tend to be favorable. The stretching ratio is not particularly limited, but is preferably, for example, 1.5 to 8 times. By setting the ratio to 1.5 times or more, the heat-shrinkability tends to be favorable, and by setting the ratio to 8 times or less, the sheet or film is less likely to break during stretching.

The thickness of the film is, for example, 10 to 300 µm.

### <Characteristics of Heat-Shrinkable Film>

### (Impact Strength)

The impact strength of the heat-shrinkable film is preferably 40 kJ/m or more, more preferably 45 kJ/m or more, and still more preferably 50 kJ/m or more. When such a range is satisfied, excellent impact resistance is achieved. The upper limit of the impact strength is, for example, 70 kJ/m or less, and is 60 kJ/m or less from the viewpoint of rigidity. Specifically, the impact strength is, for example, 40, 45, 50, 55, 60, 65, or 70 kJ/m, and may be within a range between any two of the values exemplified herein. The impact strength of the film is measured by the following method in accordance with ASTM D3420. (1) A sample piece having an MD of 100 mm and a TD of 100 mm is cut out from the heat-shrinkable film. (2) Using an impact tester manufactured by Tester Sangyo Co., Ltd., the cut sample piece is clamped on a measurement stage, the film is punched at a torque of 3 N·m, a pendulum tip diameter of 25 mm, and a measurement temperature of 23°C, the impact strength displayed on the apparatus is read, and the read value is divided by the film thickness to calculate the impact strength per unit thickness (kJ/m).

### (Heat Shrinkage Rate)

The heat shrinkage rate at 70°C (T=70) of the heat-shrinkable film is preferably 5 to 25%, and more preferably 7 to 15%. The heat shrinkage rate at 100°C (T=100) of the heat-shrinkable film is preferably 65 to 80%, and more preferably 70 to 75%. Each heat shrinkage rate is measured by the following method. (1) A test piece having an MD of 100 mm and a TD of 100 mm is cut out from the heat-shrinkable film. (2) The test piece is completely immersed in warm water at T°C for 10 seconds, then taken out, water is sufficiently wiped off, and the length L (mm) in the TD direction is measured. (3) The heat shrinkage rate is calculated by the following formula. $Heat shrinkage rate \left(%\right) = \left\{\left(100-L\right)/100\right\} \times 100$

### (Compressive Strength)

The compressive strength of the heat-shrinkable film measured by a method in accordance with JIS P8126 is preferably 6 N or more, and more preferably 8 N or more. As this value is larger, the film is less likely to buckle when attached to a container, and excellent attachability is achieved.

### <Use>

The heat-shrinkable film can be used as a heat-shrinkable label, a heat-shrinkable cap seal, or the like. In addition, it can be used as a packaging film or the like.

A container according to an embodiment of the present invention is a container to which the heat-shrinkable film is attached, and is a container such as a PET bottle to which the film is attached as a label, a seal, or the like.

### Examples

The present invention will be described in further detail below with reference to Examples. Note that these are all illustrative and do not limit the scope of the present invention.

### [Synthesis of Block Copolymers]

Block copolymers P1 to P20 were produced by the following operations in accordance with the conditions shown in Tables 1 and 2. In the synthesis of each block copolymer, where there was no step corresponding to (5) in the tables, "-" is indicated below, and step (6) was performed following step (4).

### <Block Copolymer P1>

(1) 467 kg of cyclohexane was charged into a reaction vessel.
(2) While stirring at an internal temperature of 30°C, 1400 mL of n-butyllithium (10 mass% cyclohexane solution) was added.
(3) 150 kg of styrene was added, the temperature was raised to 40°C, and polymerization was carried out.
(4) After the styrene was completely consumed, the internal temperature was cooled to 60°C or lower, and 30 kg of styrene and 20 kg of 1,3-butadiene were simultaneously added all at once and polymerized.
(6) After the styrene and 1,3-butadiene were completely consumed, 220 g of water was added for deactivation, thereby obtaining a block copolymer polymerization solution. The block copolymer polymerization solution was formed into pellets using a devolatilizing extruder to obtain the block copolymer P1 as pellets.

### <Block Copolymer P2>

(1) 467 kg of cyclohexane was charged into a reaction vessel.
(2) While stirring at an internal temperature of 30°C, 4100 mL of n-butyllithium (10 mass% cyclohexane solution) was added.
(3) 40 kg of styrene was added, the temperature was raised to 65°C, and polymerization was carried out.
(4) After the styrene was completely consumed, the internal temperature was cooled to 35°C or lower, and 100 kg of styrene and 60 kg of 1,3-butadiene were simultaneously added all at once and polymerized.
(6) After the styrene and 1,3-butadiene were completely consumed, 660 g of water was added for deactivation, thereby obtaining a block copolymer polymerization solution. The block copolymer polymerization solution was formed into pellets using a devolatilizing extruder to obtain the block copolymer P2.

### <Block Copolymer P3>

(1) 467 kg of cyclohexane was charged into a reaction vessel.
(2) While stirring at an internal temperature of 30°C, 1300 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 50°C or lower, and 67 kg of styrene and 20 kg of 1,3-butadiene were simultaneously added all at once and polymerized.
(5) After the styrene and 1,3-butadiene were completely consumed, the internal temperature was cooled to 50°C or lower, and 67 kg of styrene and 20 kg of 1,3-butadiene were simultaneously added all at once and polymerized.
(6) After the styrene and 1,3-butadiene were completely consumed, 210 g of water was added for deactivation, thereby obtaining a block copolymer polymerization solution. The block copolymer polymerization solution was formed into pellets using a devolatilizing extruder to obtain the block copolymer P3.

### <Block Copolymer P4>

(1) 467 kg of cyclohexane was charged into a reaction vessel.
(2) While stirring at an internal temperature of 30°C, 3000 mL of n-butyllithium (10 mass% cyclohexane solution) was added.
(3) 60 kg of styrene was added, the temperature was raised to 65°C, and polymerization was carried out.
(4) After the styrene was completely consumed, the internal temperature was cooled to 40°C or lower, and 124 kg of styrene and 16 kg of 1,3-butadiene were simultaneously added all at once and polymerized.
(6) After the styrene and 1,3-butadiene were completely consumed, 480 g of water was added for deactivation, thereby obtaining a block copolymer polymerization solution. The block copolymer polymerization solution was formed into pellets using a devolatilizing extruder to obtain the block copolymer P4.

### <Block Copolymer P5>

(1) 467 kg of cyclohexane was charged into a reaction vessel.
(2) While stirring at an internal temperature of 30°C, 1400 mL of n-butyllithium (10 mass% cyclohexane solution) was added.
(3) 150 kg of styrene was added, the temperature was raised to 40°C, and polymerization was carried out.
(4) After the styrene was completely consumed, the internal temperature was cooled to 60°C or lower, and 40 kg of styrene and 10 kg of 1,3-butadiene were simultaneously added all at once and polymerized.
(6) After the styrene and 1,3-butadiene were completely consumed, 220 g of water was added for deactivation, thereby obtaining a block copolymer polymerization solution. The block copolymer polymerization solution was formed into pellets using a devolatilizing extruder to obtain the block copolymer P5.

### <Block Copolymer P6>

(1) 467 kg of cyclohexane was charged into a reaction vessel.
(2) While stirring at an internal temperature of 30°C, 1500 mL of n-butyllithium (10 mass% cyclohexane solution) was added.
(3) 150 kg of styrene was added, the temperature was raised to 40°C, and polymerization was carried out.
(4) After the styrene was completely consumed, the internal temperature was cooled to 60°C or lower, and 20 kg of styrene and 30 kg of 1,3-butadiene were simultaneously added all at once and polymerized.
(6) After the styrene and 1,3-butadiene were completely consumed, 230 g of water was added for deactivation, thereby obtaining a block copolymer polymerization solution. The block copolymer polymerization solution was formed into pellets using a devolatilizing extruder to obtain the block copolymer P6.

### <Block Copolymer P7>

(1) 467 kg of cyclohexane was charged into a reaction vessel.
(2) While stirring at an internal temperature of 30°C, 3600 mL of n-butyllithium (10 mass% cyclohexane solution) was added.
(3) 40 kg of styrene was added, the temperature was raised to 65°C, and polymerization was carried out.
(4) After the styrene was completely consumed, the internal temperature was cooled to 35°C or lower, and 128 kg of styrene and 32 kg of 1,3-butadiene were simultaneously added all at once and polymerized.
(6) After the styrene and 1,3-butadiene were completely consumed, 570 g of water was added for deactivation, thereby obtaining a block copolymer polymerization solution. The block copolymer polymerization solution was formed into pellets using a devolatilizing extruder to obtain the block copolymer P7.

### <Block Copolymer P8>

(1) 467 kg of cyclohexane was charged into a reaction vessel.
(2) While stirring at an internal temperature of 30°C, 4500 mL of n-butyllithium (10 mass% cyclohexane solution) was added.
(3) 40 kg of styrene was added, the temperature was raised to 65°C, and polymerization was carried out.
(4) After the styrene was completely consumed, the internal temperature was cooled to 30°C or lower, and 64 kg of styrene and 96 kg of 1,3-butadiene were simultaneously added all at once and polymerized.
(6) After the styrene and 1,3-butadiene were completely consumed, 710 g of water was added for deactivation, thereby obtaining a block copolymer polymerization solution. The block copolymer polymerization solution was formed into pellets using a devolatilizing extruder to obtain the block copolymer P8.

### <Block Copolymer P9>

(1) 467 kg of cyclohexane was charged into a reaction vessel.
(2) While stirring at an internal temperature of 30°C, 1200 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 50°C or lower, and 80 kg of styrene and 7 kg of 1,3-butadiene were simultaneously added all at once and polymerized.
(5) After the styrene and 1,3-butadiene were completely consumed, the internal temperature was cooled to 50°C or lower, and 80 kg of styrene and 7 kg of 1,3-butadiene were simultaneously added all at once and polymerized.
(6) After the styrene and 1,3-butadiene were completely consumed, 190 g of water was added for deactivation, thereby obtaining a block copolymer polymerization solution. The block copolymer polymerization solution was formed into pellets using a devolatilizing extruder to obtain the block copolymer P9.

### <Block Copolymer P10>

(1) 467 kg of cyclohexane was charged into a reaction vessel.
(2) While stirring at an internal temperature of 30°C, 1400 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 50°C or lower, and 56 kg of styrene and 31 kg of 1,3-butadiene were simultaneously added all at once and polymerized.
(5) After the styrene and 1,3-butadiene were completely consumed, the internal temperature was cooled to 50°C or lower, and 56 kg of styrene and 31 kg of 1,3-butadiene were simultaneously added all at once and polymerized.
(6) After the styrene and 1,3-butadiene were completely consumed, 230 g of water was added for deactivation, thereby obtaining a block copolymer polymerization solution. The block copolymer polymerization solution was formed into pellets using a devolatilizing extruder to obtain the block copolymer P10.

### <Block Copolymer P11>

(1) 467 kg of cyclohexane was charged into a reaction vessel.
(2) While stirring at an internal temperature of 30°C, 1300 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 50°C or lower, and 22 kg of styrene and 7 kg of 1,3-butadiene were simultaneously added all at once and polymerized.
(5) After the styrene and 1,3-butadiene were completely consumed, the internal temperature was cooled to 35°C or lower, and 112 kg of styrene and 33 kg of 1,3-butadiene were simultaneously added all at once and polymerized.
(6) After the styrene and 1,3-butadiene were completely consumed, 210 g of water was added for deactivation, thereby obtaining a block copolymer polymerization solution. The block copolymer polymerization solution was formed into pellets using a devolatilizing extruder to obtain the block copolymer P11.

### <Block Copolymer P12>

(1) 467 kg of cyclohexane was charged into a reaction vessel.
(2) While stirring at an internal temperature of 30°C, 1300 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 50°C or lower, and 78 kg of styrene and 24 kg of 1,3-butadiene were simultaneously added all at once and polymerized.
(5) After the styrene and 1,3-butadiene were completely consumed, the internal temperature was cooled to 60°C or lower, and 56 kg of styrene and 16 kg of 1,3-butadiene were simultaneously added all at once and polymerized.
(6) After the styrene and 1,3-butadiene were completely consumed, 210 g of water was added for deactivation, thereby obtaining a block copolymer polymerization solution. The block copolymer polymerization solution was formed into pellets using a devolatilizing extruder to obtain the block copolymer P12.

### <Block Copolymer P13>

(1) 467 kg of cyclohexane was charged into a reaction vessel.
(2) While stirring at an internal temperature of 30°C, 1400 mL of n-butyllithium (10 mass% cyclohexane solution) was added.
(3) 150 kg of styrene was added, the temperature was raised to 40°C, and polymerization was carried out.
(4) After the styrene was completely consumed, the internal temperature was cooled to 60°C or lower, and 44 kg of styrene and 6 kg of 1,3-butadiene were simultaneously added all at once and polymerized.
(6) After the styrene and 1,3-butadiene were completely consumed, 220 g of water was added for deactivation, thereby obtaining a block copolymer polymerization solution. The block copolymer polymerization solution was formed into pellets using a devolatilizing extruder to obtain the block copolymer P13.

### <Block Copolymer P14>

(1) 467 kg of cyclohexane was charged into a reaction vessel.
(2) While stirring at an internal temperature of 30°C, 1400 mL of n-butyllithium (10 mass% cyclohexane solution) was added.
(3) 150 kg of styrene was added, the temperature was raised to 40°C, and polymerization was carried out.
(4) After the styrene was completely consumed, the internal temperature was cooled to 60°C or lower, and 10 kg of styrene and 40 kg of 1,3-butadiene were simultaneously added all at once and polymerized.
(6) After the styrene and 1,3-butadiene were completely consumed, 240 g of water was added for deactivation, thereby obtaining a block copolymer polymerization solution. The block copolymer polymerization solution was formed into pellets using a devolatilizing extruder to obtain the block copolymer P14.

### <Block Copolymer P15>

(1) 467 kg of cyclohexane was charged into a reaction vessel.
(2) While stirring at an internal temperature of 30°C, 3300 mL of n-butyllithium (10 mass% cyclohexane solution) was added.
(3) 40 kg of styrene was added, the temperature was raised to 80°C, and polymerization was carried out.
(4) After the styrene was completely consumed, the internal temperature was cooled to 35°C or lower, and 144 kg of styrene and 16 kg of 1,3-butadiene were simultaneously added all at once and polymerized.
(6) After the styrene and 1,3-butadiene were completely consumed, 520 g of water was added for deactivation, thereby obtaining a block copolymer polymerization solution. The block copolymer polymerization solution was formed into pellets using a devolatilizing extruder to obtain the block copolymer P15.

### <Block Copolymer P16>

(1) 467 kg of cyclohexane was charged into a reaction vessel.
(2) While stirring at an internal temperature of 30°C, 4700 mL of n-butyllithium (10 mass% cyclohexane solution) was added.
(3) 40 kg of styrene was added, the temperature was raised to 80°C, and polymerization was carried out.
(4) After the styrene was completely consumed, the internal temperature was cooled to 25°C or lower, and 48 kg of styrene and 112 kg of 1,3-butadiene were simultaneously added all at once and polymerized.
(6) After the styrene and 1,3-butadiene were completely consumed, 730 g of water was added for deactivation, thereby obtaining a block copolymer polymerization solution. The block copolymer polymerization solution was formed into pellets using a devolatilizing extruder to obtain the block copolymer P16.

### <Block Copolymer P17>

(1) 467 kg of cyclohexane was charged into a reaction vessel.
(2) While stirring at an internal temperature of 30°C, 1200 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 40°C or lower, and 82 kg of styrene and 5 kg of 1,3-butadiene were simultaneously added all at once and polymerized.
(5) After the styrene and 1,3-butadiene were completely consumed, the internal temperature was cooled to 50°C or lower, and 82 kg of styrene and 5 kg of 1,3-butadiene were simultaneously added all at once and polymerized.
(6) After the styrene and 1,3-butadiene were completely consumed, 190 g of water was added for deactivation, thereby obtaining a block copolymer polymerization solution. The block copolymer polymerization solution was formed into pellets using a devolatilizing extruder to obtain the block copolymer P17.

### <Block Copolymer P18>

(1) 467 kg of cyclohexane was charged into a reaction vessel.
(2) While stirring at an internal temperature of 30°C, 1500 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 40°C or lower, and 46 kg of styrene and 35 kg of 1,3-butadiene were simultaneously added all at once and polymerized.
(5) After the styrene and 1,3-butadiene were completely consumed, the internal temperature was cooled to 50°C or lower, and 46 kg of styrene and 35 kg of 1,3-butadiene were simultaneously added all at once and polymerized.
(6) After the styrene and 1,3-butadiene were completely consumed, 230 g of water was added for deactivation, thereby obtaining a block copolymer polymerization solution. The block copolymer polymerization solution was formed into pellets using a devolatilizing extruder to obtain the block copolymer P18.

### <Block Copolymer P19>

(1) 467 kg of cyclohexane was charged into a reaction vessel.
(2) While stirring at an internal temperature of 30°C, 1300 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 40°C or lower, and 19 kg of styrene and 6 kg of 1,3-butadiene were simultaneously added all at once and polymerized.
(5) After the styrene and 1,3-butadiene were completely consumed, the internal temperature was cooled to 35°C or lower, and 115 kg of styrene and 34 kg of 1,3-butadiene were simultaneously added all at once and polymerized.
(6) After the styrene and 1,3-butadiene were completely consumed, 210 g of water was added for deactivation, thereby obtaining a block copolymer polymerization solution. The block copolymer polymerization solution was formed into pellets using a devolatilizing extruder to obtain the block copolymer P19.

### <Block Copolymer P20>

(1) 467 kg of cyclohexane was charged into a reaction vessel.
(2) While stirring at an internal temperature of 30°C, 1300 mL of n-butyllithium (10 mass% cyclohexane solution) was added.
(3) 26 kg of styrene was added, the temperature was raised to 80°C, and polymerization was carried out.
(4) After the styrene was completely consumed, the internal temperature was cooled to 40°C or lower, and 88 kg of styrene and 28 kg of 1,3-butadiene were simultaneously added all at once and polymerized.
(5) After the styrene and 1,3-butadiene were completely consumed, the internal temperature was cooled to 70°C or lower, and 46 kg of styrene and 12 kg of 1,3-butadiene were simultaneously added all at once and polymerized.
(6) After the styrene and 1,3-butadiene were completely consumed, 210 g of water was added for deactivation, thereby obtaining a block copolymer polymerization solution. The block copolymer polymerization solution was formed into pellets using a devolatilizing extruder to obtain the block copolymer P20.

The following measurements and analyses were performed on the obtained block copolymers.

### <Weight-Average Molecular Weight>

The weight-average molecular weight of the block copolymer was measured using the following GPC measurement apparatus and conditions, and was calculated as a polystyrene-equivalent molecular weight based on a calibration curve prepared using standard polystyrene.
Apparatus name: HLC-8220GPC (manufactured by Tosoh Corporation)
Column: Four Shodex GPC KF-404 columns (manufactured by Showa Denko K.K.) connected in series
Temperature: 40°C
Detection: Differential refractive index
Solvent: Tetrahydrofuran
Concentration: 2 mass%
Calibration curve: Prepared using standard polystyrene (manufactured by VARIAN)

### <Contents of Monomer Units and Masses of Blocks>

The contents of the vinyl aromatic monomer unit (styrene unit) and the conjugated diene monomer unit (butadiene unit) contained in the block copolymer and each block were calculated from the charged amounts of the vinyl aromatic monomer (styrene) and the conjugated diene monomer (1,3-butadiene) during the production of the block copolymer. In addition, the masses of the respective blocks (S/B3) and (S/B4) were also calculated from the charged amounts of the vinyl aromatic monomer and the conjugated diene monomer in each polymerization stage.

**[Table 1]**

| Table 1 | | | Production Example | | | | | | | | | |
|---|---|---|---|---|---|---|---|---|---|---|---|---|
| Charging Order | Raw Material | Unit | P1 | P2 | P3 | P4 | P5 | P6 | P7 | P8 | P9 | P10 |
| (1) | Cyclohexane | kg | 467 | 467 | 467 | 467 | 467 | 467 | 467 | 467 | 467 | 467 |
| (2) | n-Butyllithium Solution | mL | 1400 | 4100 | 1300 | 3000 | 1400 | 1500 | 3600 | 4500 | 1200 | 1400 |
| (3) | Styrene Monomer | kg | 150 | 40 | 26 | 60 | 150 | 150 | 40 | 40 | 26 | 26 |
| (4) | Styrene Monomer | kg | 30 | 100 | 67 | 124 | 40 | 20 | 128 | 64 | 80 | 56 |
| | Butadiene Monomer | kg | 20 | 60 | 20 | 16 | 10 | 30 | 32 | 96 | 7 | 31 |
| (5) | Styrene Monomer | kg | | | 67 | | | | | | 80 | 56 |
| | Butadiene Monomer | kg | | | 20 | | | | | | 7 | 31 |
| Structure of Block Copolymer | | | (S1)-(S/B1) | (S2)-(S/B2) | (S3)-(S/B3)-(S/B4) | (S4)-(S/B5) | (S1)-(S/B1) | (S1)-(S/B1) | (S2)-(S/B2) | (S2)-(S/B2) | (S3)-(S/B3)-(S/B4) | (S3)-(S/B3)-(S/B4) |
| | | | A | B | C | D | A | A | B | B | C | C |
| Weight-Average Molecular Weight of Block Copolymer | | × 10^4 | 17.2 | 6.7 | 19.5 | 7.8 | 16.9 | 17.3 | 7.1 | 6.9 | 19.7 | 19.9 |
| Conjugated Diene Content of Block Copolymer | | mass% | 10 | 30 | 20 | 8 | 5 | 15 | 16 | 48 | 7 | 31 |
| Conjugated Diene Content in (S/B) | | mass% | 40 | 38 | (S/B3):23 | 11 | 20 | 60 | 20 | 60 | (S/B3):8 | (S/B3):36 |
| | | | | | (S/B4):23 | | | | | | (S/B4):8 | (S/B4):36 |
| Composition Ratio of (S/B) Polymer (5)/(4) | | mass% | - | - | 1.0 | - | - | - | - | - | 1.0 | 1.0 |

**[Table 2]**

| Table 2 | | | Production Example | | | | | | | | | |
|---|---|---|---|---|---|---|---|---|---|---|---|---|
| Charging Order | Raw Material | Unit | P11 | P12 | P13 | P14 | P15 | P16 | P17 | P18 | P19 | P20 |
| (1) | Cyclohexane | kg | 467 | 467 | 467 | 467 | 467 | 467 | 467 | 467 | 467 | 467 |
| (2) | n-Butyllithium Solution | mL | 1300 | 1300 | 1400 | 1500 | 3300 | 4700 | 1200 | 1500 | 1300 | 1300 |
| (3) | Styrene Monomer | kg | 26 | 26 | 150 | 150 | 40 | 40 | 26 | 26 | 26 | 26 |
| (4) | Styrene Monomer | kg | 22 | 78 | 44 | 10 | 144 | 48 | 82 | 46 | 19 | 88 |
| | Butadiene Monomer | kg | 7 | 24 | 6 | 40 | 16 | 112 | 5 | 35 | 6 | 28 |
| (5) | Styrene Monomer | kg | 112 | 56 | | | | | 82 | 46 | 115 | 46 |
| | Butadiene Monomer | kg | 33 | 16 | | | | | 5 | 35 | 34 | 12 |
| Structure of Block Copolymer | | | (S3)-(S/B3)-(S/B4) | (S3)-(S/B3)-(S/B4) | (S1)-(S/B1) | (S1)-(S/B1) | (S2)-(S/B2) | (S2)-(S/B2) | (S3)-(S/B3)-(S/B4) | (S3)-(S/B3)-(S/B4) | (S3)-(S/B3)-(S/B4) | (S3)-(S/B3)-(S/B4) |
| | | | C | C | A | A | B | B | C | C | C | C |
| Weight-Average Molecular Weight of Block Copolymer | | × 10^4 | 20.1 | 19.8 | 17.0 | 17.5 | 7.3 | 7.0 | 19.8 | 20.0 | 20.3 | 20.2 |
| Conjugated Diene Content of Block Copolymer | | mass% | 20 | 20 | 3 | 20 | 8 | 56 | 5 | 35 | 20 | 20 |
| Conjugated Diene Content in (S/B) | | mass% | (S/B3):24 | (S/B3):24 | 12 | 80 | 10 | 70 | (S/B3):6 | (S/B3):43 | (S/B3):24 | (S/B3):24 |
| | | | (S/B4):23 | (S/B4):22 | | | | | (S/B4):6 | (S/B4):43 | (S/B4):23 | (S/B4):21 |
| Composition Ratio of (S/B) Polymer (5)/(4) | | mass% | 5.0 | 0.7 | - | - | - | - | 1.0 | 1.0 | 6.0 | 0.5 |

### [Preparation of Block Copolymer Composition]

The respective block copolymers P1 to P20 obtained by the above synthesis were melt-mixed by an extruder in accordance with the contents shown in Tables 3 and 4 to obtain block copolymer compositions RA1 to RA12 and RB1 to RB11 of Examples and Comparative Examples. The content (mass%) of each block copolymer represents the content of each block copolymer when the total content of the block copolymers P1 to P20 contained in the block copolymer composition is 100 mass%.

### [Measurements and Analyses]

The following measurements and analyses were performed on the block copolymer compositions of the respective Examples and Comparative Examples.

### <Flexural Modulus>

Using the pellets of the block copolymer composition, an ISO dumbbell test piece having a thickness of 4 mm was produced using an injection molding machine. Using this dumbbell piece, the measurement was performed in accordance with ISO 178 under the conditions of a bending speed of 2 mm/min, a relative humidity of 50%, and an ambient temperature of 23°C.

**[Table 3]**

| Table 3 | | Unit | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| | | | RA-1 | RA-2 | RA-3 | RA-4 | RA-5 | RA-6 | RA-7 | RA-8 | RA-9 | RA-10 | RA-11 | RA-12 |
| Block Copolymer Composition | P-1 | mass% | 39 | 24 | 9 | | | 24 | 24 | 24 | 24 | 24 | 24 | 21 |
| | P-2 | mass% | 26 | 16 | 6 | 16 | 16 | | | 16 | 16 | 16 | 16 | 14 |
| | P-3 | mass% | 35 | 60 | 85 | 60 | 60 | 60 | 60 | | | | | 50 |
| | P-4 | mass% | | | | | | | | | | | | 15 |
| | P-5 | mass% | | | | 24 | | | | | | | | |
| | P-6 | mass% | | | | | 24 | | | | | | | |
| | P-7 | mass% | | | | | | 16 | | | | | | |
| | P-8 | mass% | | | | | | | 16 | | | | | |
| | P-9 | mass% | | | | | | | | 60 | | | | |
| | P-10 | mass% | | | | | | | | | 60 | | | |
| | P-11 | mass% | | | | | | | | | | 60 | | |
| | P-12 | mass% | | | | | | | | | | | 60 | |
| | Butadiene Unit Content | mass% | 18.7 | 19.2 | 19.7 | 18.0 | 20.4 | 21.8 | 26.9 | 11.4 | 25.8 | 19.2 | 19.2 | 17.5 |
| Flexural Modulus | | MPa | 1600 | 1500 | 1400 | 1550 | 1470 | 1550 | 1470 | 1900 | 1300 | 1480 | 1480 | 1550 |

**[Table 4]**

| Table 4 | | Unit | Comparative Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| | | | RB-1 | RB-2 | RB-3 | RB-4 | RB-5 | RB-6 | RB-7 | RB-8 | RB-9 | RB-10 | RB-11 |
| Block Copolymer Composition | P-1 | mass% | 45 | 6 | | | 24 | 24 | 24 | 24 | 24 | 24 | 20 |
| | P-2 | mass% | 30 | 4 | 16 | 16 | | | 16 | 16 | 16 | 16 | |
| | P-3 | mass% | 25 | 90 | 60 | 60 | 60 | 60 | | | | | 80 |
| | P-13 | mass% | | | 24 | | | | | | | | |
| | P-14 | mass% | | | | 24 | | | | | | | |
| | P-15 | mass% | | | | | 16 | | | | | | |
| | P-16 | mass% | | | | | | 16 | | | | | |
| | P-17 | mass% | | | | | | | 60 | | | | |
| | P-18 | mass% | | | | | | | | 60 | | | |
| | P-19 | mass% | | | | | | | | | 60 | | |
| | P-20 | mass% | | | | | | | | | | 60 | |
| | Butadiene Unit Content | mass% | 18.5 | 19.8 | 17.5 | 21.6 | 15.7 | 23.4 | 10.2 | 28.2 | 19.2 | 19.2 | 18.0 |
| Flexural Modulus | | MPa | 1650 | 1230 | 1650 | 1410 | 1570 | 1190 | 2010 | 1180 | 1420 | 1480 | 1290 |

To 100 parts by mass of each of the compositions RA1 to RA12 and RB1? to RB11, 1.3 parts by mass of high-impact polystyrene "E640N" (manufactured by Toyo Styrene Co., Ltd.) was added (dry-blended) as an antiblocking agent to produce heat-shrinkable films. The respective physical properties of the heat- shrinkable films are shown in Tables 5 and 6.

### (1) Extrusion of Unstretched Sheet

Using an extruder equipped with a T-die having a lip width of 300 µm capable of extrusion-molding a sheet, the block copolymer composition of each of the Examples and Comparative Examples dry-blended with high-impact polystyrene was melted and extruded into a sheet. The extruder for melting the resin and supplying it to the T-die was a 65 mmφ single-screw extruder, and the set temperature was 210°C. Further, the set temperature of the T-die was 210°C. The thickness of the obtained sheet was 0.30 mm.

### (2) Stretching of Unstretched Sheet

The obtained unstretched sheet was fed to a longitudinal stretching machine having two rolls with different rotational speeds so as to be stretched 1.1 times in the MD at 90°C, and then fed to a tenter-type transverse stretching machine to be stretched 4.5 times in the TD at 90°C, thereby finally obtaining heat-shrinkable films having a thickness of 50 µm using the block copolymer compositions of the Examples and Comparative Examples.

### <Heat Shrinkage Rate>

The heat shrinkage rate of the film was measured by the following method under conditions of T=70°C and T=100°C.
(1) A test piece having an MD width of 100 mm and a TD width of 100 mm was cut out from the heat-shrinkable film obtained by stretching.
(2) The test piece was completely immersed in warm water at T°C for 10 seconds, then taken out, water was sufficiently wiped off, and the length L (mm) in the TD direction was measured. (3) The heat shrinkage rate was calculated by the following formula. $Heat shrinkage rate \left(%\right) = \left\{\left(100-L\right)/100\right\} \times 100$

### <Compressive Strength>

The compressive strength of the film was measured by a method in accordance with JIS P8126. The heat-shrinkable film was cut into a strip shape of MD 12.7 mm and TD 150 mm and set in a cylindrical shape on a support prepared in advance, and then the support was placed on a mount of a tensile tester (RTG-1210, manufactured by A&D Company, Limited) to perform the measurement. The measurement was performed only for the compressive strength in the MD.

### <Impact Strength>

The impact strength of the heat-shrinkable film obtained by stretching was measured by the following method in accordance with ASTM D3420.
(1) A sample piece having an MD of 100 mm and a TD of 100 mm was cut out from the heat-shrinkable film.
(2) Using an impact tester manufactured by Tester Sangyo Co., Ltd., the cut sample piece was clamped on a measurement stage, the film was punched at a torque of 3 N·m, a pendulum tip diameter of 25 mm, and a measurement temperature of 23°C, the impact strength displayed on the apparatus was read, and the read value was divided by the film thickness to calculate the impact strength per unit thickness (kJ/m).

**[Table 5]**

| Table 5 | | Unit | Example | | | | | | | | | | | |
|---|---|---|---|---|---|---|---|---|---|---|---|---|---|---|
| | | | 13 | 14 | 15 | 16 | 17 | 18 | 19 | 20 | 21 | 22 | 23 | 24 |
| Block Copolymer Composition | | | RA-1 | RA-2 | RA-3 | RA-4 | RA-5 | RA-6 | RA-7 | RA-8 | RA-9 | RA-10 | RA-11 | RA-12 |
| Heat Shrinkage Rate | 70° C × 10 sec | % | 5 | 10 | 25 | 8 | 12 | 10 | 11 | 7 | 15 | 9 | 10 | 11 |
| | 100° C × 10 sec | % | 68 | 72 | 77 | 70 | 73 | 71 | 73 | 70 | 73 | 72 | 73 | 73 |
| Compressive Strength | | N | 12 | 10 | 8 | 11 | 9 | 11 | 9 | 15 | 6 | 10 | 10 | 11 |
| Impact Strength | | kJ/m | 40 | 48 | 60 | 46 | 50 | 42 | 46 | 44 | 52 | 42 | 46 | 52 |

**[Table 6]**

| Table 6 | | Unit | Comparative Example | | | | | | | | | | |
|---|---|---|---|---|---|---|---|---|---|---|---|---|---|
| | | | 12 | 13 | 14 | 15 | 16 | 17 | 18 | 19 | 20 | 21 | 22 |
| Block Copolymer Composition | | | RB-1 | RB-2 | RB-3 | RB-4 | RB-5 | RB-6 | RB-7 | RB-8 | RB-9 | RB-10 | RB-11 |
| Heat Shrinkage Rate | 70° C × 10 sec | % | 3 | 29 | 6 | 15 | 9 | 12 | 5 | 21 | 9 | 10 | 18 |
| | 100° C × 10 sec | % | 66 | 77 | 68 | 59 | 71 | 70 | 78 | 74 | 73 | 74 | 75 |
| Compressive Strength | | N | 12 | 5 | 12 | 8 | 11 | 4 | 15 | 4 | 10 | 10 | 5 |
| Impact Strength | | kJ/m | 20 | 60 | 32 | 44 | 30 | 48 | 24 | 40 | 36 | 36 | 54 |

## Claims

1. A block copolymer composition comprising a block copolymer containing a vinyl aromatic monomer unit and a conjugated diene monomer unit, wherein:
the block copolymer composition contains 10 to 30 mass% of the conjugated diene monomer unit when a total mass of the vinyl aromatic monomer unit and the conjugated diene monomer unit in the block copolymer composition is taken as 100 mass%;
the block copolymer composition comprises 9 to 39 mass% of a block copolymer A, 6 to 26 mass% of a block copolymer B, and 35 to 85 mass% of a block copolymer C, when a total content of the block copolymer containing the vinyl aromatic monomer unit and the conjugated diene monomer unit in the block copolymer composition is taken as 100 mass%;
the block copolymer A has a block structure represented by (S1)-(S/B1);
(S1) is a block containing 85 to 100 mass% of the vinyl aromatic monomer unit;
(S/B1) is a tapered block containing the vinyl aromatic monomer unit and the conjugated diene monomer unit and containing 20 to 60 mass% of the conjugated diene monomer unit;
the block copolymer A contains 5 to 15 mass% of the conjugated diene monomer unit;
the block copolymer B has a block structure represented by (S2)-(S/B2);
(S2) is a block containing 85 to 100 mass% of the vinyl aromatic monomer unit;
(S/B2) is a tapered block containing the vinyl aromatic monomer unit and the conjugated diene monomer unit and containing 20 to 60 mass% of the conjugated diene monomer unit;
the block copolymer B contains more than 15 mass% and 50 mass% or less of the conjugated diene monomer unit;
the block copolymer C has a block structure represented by (S3)-(S/B3)-(S/B4);
(S3) is a block containing 85 to 100 mass% of the vinyl aromatic monomer unit;
(S/B3) and (S/B4) are each a tapered block containing the vinyl aromatic monomer unit and the conjugated diene monomer unit and containing 8 to 36 mass% of the conjugated diene monomer unit;
the block copolymer C contains 7 to 32 mass% of the conjugated diene monomer unit; and
the mass ratio of (S/B4) to (S/B3) is 0.6 to 5.5.

2. The block copolymer composition of Claim 1, wherein the block copolymer composition has, in a molecular weight distribution by GPC measurement in terms of polystyrene-equivalent molecular weight:
at least one molecular weight peak within a weight-average molecular weight range of 140,000 to 220,000; and
at least one molecular weight peak within a weight-average molecular weight range of 50,000 to 90,000.

3. The block copolymer composition of Claim 1, wherein a flexural modulus measured in accordance with ISO 178 using a Type A test specimen conforming to ISO 3167 is 1300 MPa or more.

4. The block copolymer composition of Claim 1, further comprising a block copolymer D, wherein:
the block copolymer D has a block structure represented by (S4)-(S/B5);
(S4) is a block containing 85 to 100 mass% of the vinyl aromatic monomer unit;
(S/B5) is a tapered block containing the vinyl aromatic monomer unit and the conjugated diene monomer unit and containing 5 mass% or more and less than 20 mass% of the conjugated diene monomer unit; and
the block copolymer D contains 4 to 20 mass% of the conjugated diene monomer unit.

5. A heat-shrinkable film comprising a layer constituted of the block copolymer composition of any one of Claims 1 to 4.

6. A container having the heat-shrinkable film of Claim 5 attached thereto.
